Europäisches Patentamt

European Patent Office

Office européen des brevets

(11) Publication number: **0 187 492**
**A1**

(12) # EUROPEAN PATENT APPLICATION

(21) Application number: **85309019.9**

(22) Date of filing: **11.12.85**

(51) Int. Cl.⁴: **A 47 J 37/08**
**A 47 J 37/06**

(30) Priority: **11.12.84 GB 8431198**

(43) Date of publication of application:
**16.07.86 Bulletin 86/29**

(84) Designated Contracting States:
**AT BE CH DE FR GB IT LI LU NL SE**

(71) Applicant: **SA PATSCENTRE BENELUX NV**
**Zoning Industrial De Wauthier Braine 7 Avenue Reine**
**Astrid**
**B-1430 Braine Le Chateau(BE)**

(72) Inventor: **Browne, Edward Keith**
**Rue Chenemont 9**
**B-1475 Baisy-Thy(BE)**

(72) Inventor: **Paton, Michael**
**4 Old North Road**
**Royston, Hertforshire(GB)**

(74) Representative: **Crawford, Andrew Birkby et al,**
**A.A. THORNTON & CO. Northumberland House 303-306**
**High Holborn**
**London WC1V 7LE(GB)**

(54) **Electric cooking utensil.**

(57) An electric cooking utensil, such as a toaster, applies heating elements (11) directly onto a piece of food to be cooked. The utensil comprises electric heaters (22,23) each of which comprises a substrate (10), with a conductive strip (11) deposited on one surface of the substrate (10) to act as a heating element. The heaters (22,23) are connected fixedly to housing parts (20,21) or connected in a manner which allows limited movement to permit even contact of the heating elements (11) on slanting pieces of food. The housing parts (20,21) may be arranged in a number of different constructions to allow relative movement of the heaters (22,23) to bring the heating elements (11) into intimate contact with the food to be cooked.

*Fig.4.*

EP 0 187 492 A1

- 1 -

# ELECTRIC COOKING UTENSIL

The present invention relates to electric cooking utensils such as toasters and sandwich makers.

Conventional toasters are constructed to have the material to be toasted located in a wire cage within a housing with electrical heating elements disposed between the cage and housing. Toasting of the material takes place due to radiant heat from the heating elements which must therefore produce red heat.

The disadvantage of this arrangement is that because the heating elements produce red heat, the housing of the toaster must be spaced therefrom which results in undue bulk while nevertheless still resulting in the casing becoming unacceptably hot.

Sandwich makers have a different construction in that heated plates are brought into contact with the material to be cooked but it is usual to have the plates heated by conventional electrical heating elements disposed on the other side of the plates from the material to be cooked. The disadvantage of this arrangement is that again the casing tends to become unacceptably hot.

In both the above prior devices, the amount of energy consumed is considerably in excess of the amount theoretically required because with a toaster much heat is lost to the casing and to atmosphere while in the case of a sandwich maker heat is lost to the casing and in heating up the plates.

It is an object of the invention to provide an electric cooking utensil utilising a heater construction which will overcome or at least mitigate the above disadvantages.

To this end, the invention provides a heated construction comprising a base substrate, at least one surface of which is electrically insulating, said surface being provided with a printed heating element.

In use, the heater construction is brought into intimate contact with the material to be heated. The advantage of this arrangement is that the temperature of the heat may be as little as 250°C and yet still produce acceptable results. This in turn means that a casing used to house such a heater construction can be positioned much closer to the heater than before while still being kept at a relatively low and hence safe temperature which will reduce the overall bulk of the casing.

Features and advantages of the present invention will become apparent from the following description given by way of example when taken in conjunction with the accompanying drawings in which:-

Figure 1 shows a perspective view of a heater according to the present invention;

Figure 2 shows a basic electric cooking utensil using heaters as shown in Figure 1;

Figure 3 shows a further basic electric cooking utensil using heaters as shown in Figure 1;

Figure 4 shows a perspective view of a practical electric cooking utensil using heaters as shown in Figure 1; and

Figure 5 shows a diagrammatic cross-sectional view of the cooking utensil of Figure 4 generally taken along the line V-V.

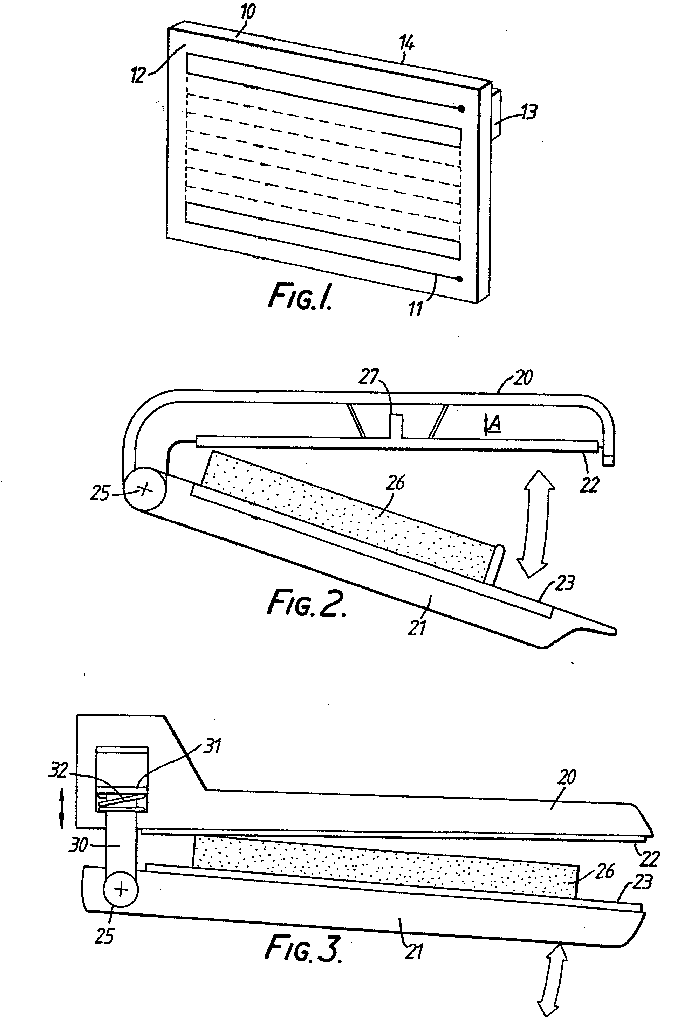

Figure 1 shows an embodiment of an electric heater for a cooking utensil according to the present invention. The heater comprises a substrate (10) with a serpentine conductor (11) provided on one major surface (12) of the substrate (10). Control equipment (13) is provided on the other major surface (14) of the substrate (10). The control equipment (13) comprises electronic feedback control not requiring any electro-mechanical components.

The heater substrate (10) may be made from a variety of materials, such as high temperature engineering plastics materials, glasses, alumina or insulated metals, the maximum processing temperature of the substrate determining which electronic materials can subsequently be processed upon it. In a preferred embodiment aluminium is used because of its low thermal mass (i.e. it heats quickly), cheapness and ready machinability. With aluminium, or any other metal, an insulating layer is required this may be sprayed or screen printed onto the metal. Thermoplastics materials, such as polyimide after curing, are particularly useful as they are tolerant of mismatches in coefficients of linear expansion. To provide a compact unit it is desirable to keep the substrate thickness to a minimum however it is also important not to sacrifice mechanical strength. With an aluminium substrate, for example, a thickness of about 1mm would be about the lowest practicable unless the mechanical strength were improved by adding a webbing on the back of the substrate. With metallic substrates there is also the insulating layer to be considered. This must be thick enough to avoid short circuits through pinholing and dust. A satisfactory insulator thickness for polyimide on an aluminium substrate is about 60 μm.

The serpentine conductor (11) of the heater in Figure 1 is a heating element. This may be made from a variety of conductive materials deposited on the substrate by a suitable method, e.g. screen printing or writing with a robot arm. The type of material used is chosen to be compatible with the substrate (and insulator if applicable), on high temperature glasses commercially available thick film type materials may be used; among other possible materials are metal powders or insulants loaded with metal particles, such as polyimide loaded with silver flake. The thickness of the heating element is largely determined by current carrying requirements and a thickness of about 10 μm is suitable for many applications.

The configuration of the heating element is serpentine in the embodiment shown in Figure 1 but other configurations may be used. By increasing the density of the element on the substrate a greater Watts density is obtained and hence a shorter cooking time. However, care must be taken not to thermally overstress the element - this could be avoided by using a feedback system from a surface mounted thermocouple or thermistor to the control electronics. The control equipment itself need not be directly attached to the substrate (as shown in Figure 1) but may be arranged elsewhere within the cooking utensil of which the heater is a part.

It is advantageous to cover both sides of the heater with a food-grade non-stick coating such as are commercially available.

Also the heater may be moulded by bending and pressing into a three-dimensional shape as desired.

Figures 2 and 3 show two basic electric cooking utensils which use heaters as shown in Figure 1.

Figure 2 shows a toaster having relatively movable housing parts 20 and 21 each provided with a heater 22 and 23 respectively. The housing parts 20 and 21 are hinged together at 25 to permit opening and closing of the housing. A piece of bread to be toasted is identified by the reference numeral 26. The heater 23 is fixed relative to its housing part whereas the heater 22 is mounted in a post 27 to be movable as indicated by the arrow A in order to ensure that when the housing parts 20,21 are closed together, the surfaces of the heaters 22,23 on which the conductors are provided will be in intimate contact with the opposite sides of the slice of bread 26 and different thicknesses of bread can be accommodated.

As an alternative the heater 23 could also be movable in the same way as heater 22.

An alternative construction would be to have an intermediate arm, one end of which is hinged at 25 and the other end of which is connected to the housing part 21. This would enable the toaster to accommodate different thicknesses of bread to be toasted without necessitating the use of "floating" heaters although such could be used with the intermediate arm construction.

Figure 3 shows an alternative construction for a toaster. In Figure 3, like reference numerals are used for like parts. This construction is similar in many ways to that shown in Figure 2 in as much as heaters 22,23 may be fixed or "floating". The major difference is in the way the housing parts are connected together and co-operate to accommodate the slice of bread to be toasted.

In Figure 3, the housing part 21 is hinged to an intermediate member 30 which is reciprocable with respect to the housing part 20 as indicated by the arrows in Figure 3. The member 30 forms the position rod of a piston assembly whose piston head 31 is biased by a spring 32 to the upper, closed position. The hinge 25 may be provided with a ratchet arrangement whereby the housing part 21 can assume and maintain any desired angular position with respect to the member 30.

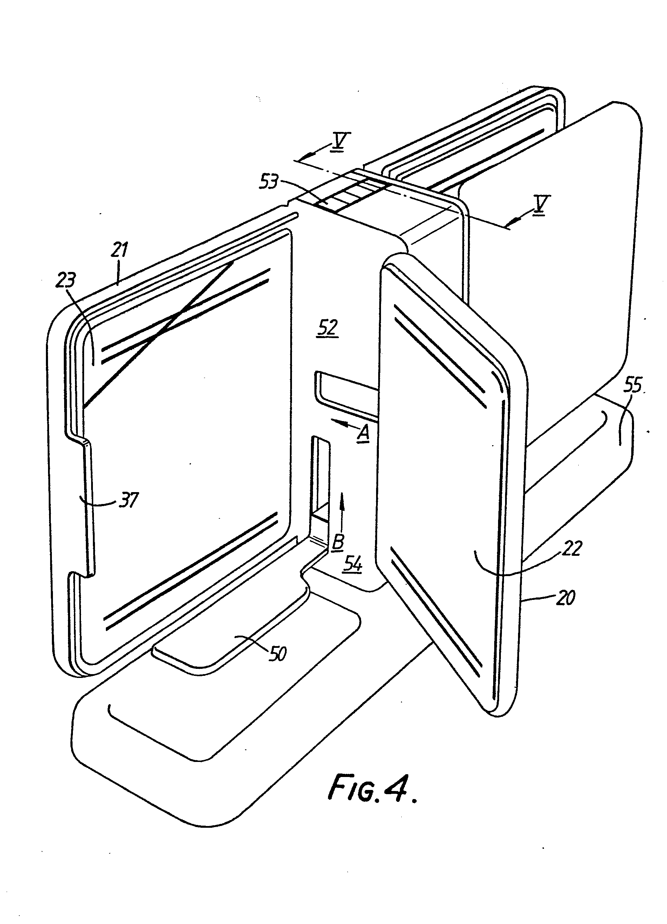

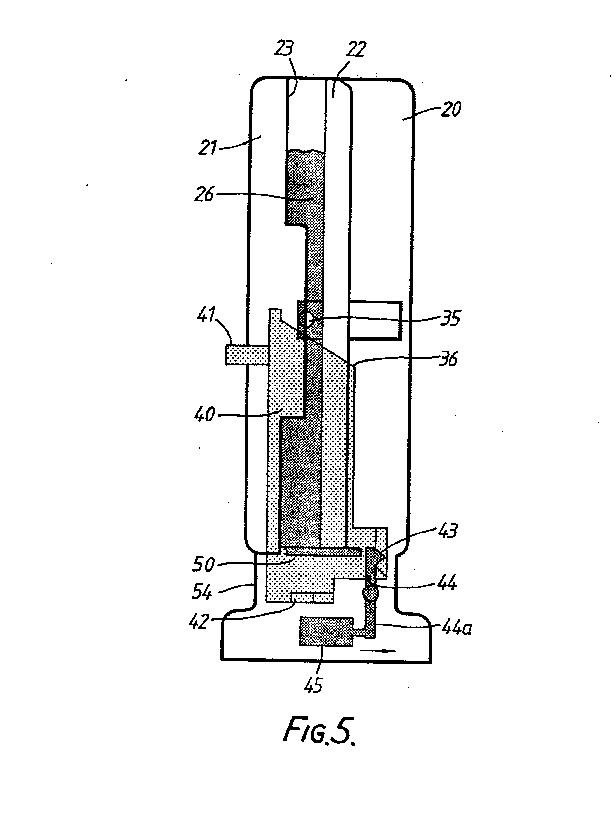

Figures 4 and 5 show a practical embodiment of a cooking utensil which latches in a different manner from that used in the simple embodiments of Figures 2 and 3 (like reference numerals are used wherever possible).

Figure 4 shows an upright cooking utensil using heaters in two pairs to defined two cooking areas, each pair comprising one fixed heater (23) and one floating heater (22) located in respective housing parts (21) and (20) with thermally and electrically insulating material between each heater and its housing part. The housing parts (20), containing floating heaters (22), are hinged to allow cleaning of the surfaces of all the heaters. In each cooking area an ejector (50) is provided movable between a first, raised position and a second lowered (cooking) position as indicated by arrow B. Between the cooking areas is an operating column (52) which houses a brown control (53), for setting the length of the cooking time, and an operating handle (41). The whole utensil is mounted by means of a base portion (54) which is attached to a detachable drip tray (55).

To use the cooking utensil, a desired cooking time is set using the brown control (53), the food to be cooked, e.g. bread (26), is dropped into one or both cooking areas to rest on the ejector (50) in its raised position. The operating handle (41) is lowered manually, the ejector (50) is moved to its lower position and the floating heater (22) moves towards the fixed heater (23) until it is brought into intimate contact with the food to be cooked. If no food is present in the cooking area projections (37) on one housing (21) impact the opposite housing (20) on the lowering of the operating handle (41) so that contact between the facing heaters is avoided. Clearly projections (37) could be located on either housing whilst still achieving the some effect.

Figure 5 shows a cross-sectional view of the cooking utensil of Figure 4 in a closed, cooking position and more clearly illustrates the working of the cooking utensil. The operating handle (41) is connected to a separation device (40) which has a slanting profile to its top face. The separation device (40) is biased towards the top of the operating column (52) by a spring (not shown). The floating heater (22) is biased towards the fixed heater (23) by a further spring (not shown) but its movement is restricted by the separation device (40) in two ways: firstly a lip (36) along one edge of the separation device (40) protrudes behind the floating heater (22) limiting the maximum separation of the two heaters, and secondly a cam follower (35) provided on the free surface of the floating heater (22) rests on the slanting top of the separation device (40) and is constrained to move along this profile when the separation device (40) is moved up and down.

When the operating handle (41) is manually depressed the separation device (40) is lowered and the ejector (50) is moved to its lower position. The floating heater (22) is gradually freed to move under the action of its bias spring and it is brought up against the food to be cooked (26). A latch (44) biased in the direction D by a spring (not shown) engages a notch (43) provided in the separation device (40). The separation device (40) is retained in its lowered position, electrical contact is made and current flows in the conductors (11) of each heater. When the current has flowed for the time set by the brown control (53) a solenoid (45) is activated which pushes the lower end (44a) of the latch (44) and disengages the latch from the notch. Electrical contact is broken and the separation device (40) is released and moves upward under the influence of its bias spring. The cam follower (35) is moved along the slanting profile of

- 8 -

0187492

the rising separation device (40) causing the floating heater (22) to move away from the fixed heater (23). A bar (42) attached to the separation device (40) is brought up against the ejector (50) when the heater separation has reached its maximum and the ejector (50) is raised to its first position.

Figure 5 only shows half of the cooking utensil. The other pair of heaters are operated in a similar way with certain details open to variation. A single operating handle (41) may be used to operate one separation device (40) configured to control the separation of both sets of heaters, or alternatively, two separation devices (40) one for each pair of heaters. Further, two operating handles (42) may be provided to operate two separation devices (40) one for each pair of heaters. Whichever mode is used the provision of floating heaters (22) enables the heating elements (11) to contact the food (26) directly.

The brown control (53) comprises electronic timing circuitry connected to the heater elements (11) and to the latch release mechanism. Although a solenoid (45) has been described as the means for initiating latch release other known mechanisms could be used.

The drip tray (55) may be detached and a wall-mounting bracket attached to the base portion (54) of the cooking utensil for mounting the utensil in a transverse, generally horizontal plane. Similarly, special mountings could be used to enable the utensil to be suspended under a cabinet.

Also, as in the simpler embodiments, both heaters in a pair may be floating rather than having one heater floating and one fixed within its housing part.

CLAIMS:

1.    A utensil for cooking food comprising:
two electric heaters (22,23) each of which comprises a substrate (10), one surface (12) of which is electrically insulating and is provided with a conductive element (11), the heaters being mounted for relative movement towards and away from each other whereby to bring said conductive elements (11) of the heaters (22,23) into intimate contact with a piece of food to be cooked.

2.    A utensil according to claim 1, wherein the heaters (22,23) are located in respective housing parts (20,21) with at least one heater (22) located within its housing part (20) for limited movement in a direction transverse to said one surface (12).

3.    A utensil according to claim 2, wherein there is further provided ejector means (50) for bearing food placed between said one surfaces (12) of the heaters (22,23), said ejector means (50) being arranged to move in a plane parallel to said one surfaces (12).

4.    A utensil according to claim 3, wherein there is further provided operative means (40) arranged to move in co-operation with the ejector means (50), said operative means (40) being further arranged to initiate operation of the utensil when the ejector means (50) is at a particular location within the utensil.

5.    A utensil according to claim 4, wherein said operative means (40) is yet further arranged to permit relative movement of the heaters (22,23).

6.   A utensil according to claim 5 wherein the heaters (22,23) are biased towards each other, the operative means (40) has a slanting edge, there is a cam follower (35) attached to one of the heaters (22) and resting on said slanting edge in such a way that movement of the operative means (40) permits relative movement of the heaters (22,23)

7.   A utensil according to claim 5 or 6, wherein there is further provides means (53) for automatically terminating operation of the utensil.

8.   A utensil according to any one of the previous claims, wherein one of the housing parts (20) is pivotally connected to a member (52) to permit said one housing part (20) to be pivotted away from the other housing part (21).

9.   A utensil according to any one of the previous claims, wherein a further two of said electric heaters (22,23) are provided, the further two heaters (22,23) also being mounted for relative movement towards and away from each other whereby to bring said conductive elements (11) of the further heaters (22,23) into intimate contact with a piece of food to be cooked.

10.   An electric heater construction comprising:
     a substrate (10), one surface of which is electrically insulating and provided with a conductive element (11),
     wherein the substrate is aluminium with an electrically insulating layer of polyimide on said one surface, the conductive element (11) is polyimide loaded with silver flake and the substrate is covered with a food grade, non-stick coating.

0187492

1/3

Fig.1.

Fig.2.

Fig.3.

FIG.4.

FIG.5.

# EUROPEAN SEARCH REPORT

**0187492**
Application number

**EP 85 30 9019**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 737 624 (EILENBERGER) <br> * Claims 1,2 * | 1 | A 47 J 37/08 <br> A 47 J 37/06 |
| A | | 7,8,10 | |
| X | NL-A-6 803 985 (BOLHOVEN) <br> * Figure 3 * | 1 | |
| A | | 7,8,10 | |
| A | FR-A-2 221 106 (ELEKTRO-FOOD) <br> * Figure 3 * | 2,7,8 | |
| A | US-A-2 711 684 (TAYLOR) <br><br> * Column 4, lines 34-48 * | 3,4,7,9 | |
| A | FR-A-2 069 381 (MATSUSHITA ELECTRIC INDUSTRIAL CO.) <br> * Figures 1,7 * | 1,3-7,9 | **TECHNICAL FIELDS SEARCHED (Int. Cl.4)** <br><br> A 47 J |
| A | CH-A- 255 396 (MAXIM AG) | | |

The present search report has been drawn up for all claims

| Place of search | Date of completion of the search | Examiner |
|---|---|---|
| THE HAGUE | 12-03-1986 | BEUGELING G.L.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82